(19) Europäisches Patentamt
European Patent Office
Office européen des brevets

(11) **EP 4 742 583 A1**

(12) **EUROPEAN PATENT APPLICATION**
published in accordance with Art. 153(4) EPC

(43) Date of publication:
**13.05.2026 Bulletin 2026/20**

(21) Application number: **24857878.3**

(22) Date of filing: **27.05.2024**

(51) International Patent Classification (IPC):
**H04L 7/00** *(2006.01)* **H04L 27/26** *(2006.01)*

(52) Cooperative Patent Classification (CPC):
**H04L 7/00; H04L 27/26**

(86) International application number:
**PCT/CN2024/095487**

(87) International publication number:
**WO 2025/044332 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 CN 202311130829**

(71) Applicant: **Huawei Technologies Co., Ltd.
Shenzhen, Guangdong 518129 (CN)**

(72) Inventors:
• **LI, Zibin
Shenzhen, Guangdong 518129 (CN)**
• **HUANG, Kechao
Shenzhen, Guangdong 518129 (CN)**
• **MA, Huixiao
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **DATA PROCESSING METHOD AND DATA PROCESSING APPARATUS**

(57) Embodiments of this application disclose a data processing method and a data processing apparatus. The data processing method is applied to a receiver in the field of optical transmission, and is mainly used to implement frame synchronization. In this application, a differential processing operation is introduced during frame synchronization performed by the receiver. Specifically, the receiver performs differential processing on received data after channel transmission, to obtain differential data; and performs differential processing on an obtained pilot sequence, to obtain a differential pilot sequence. Further, the receiver performs cross-correlation calculation on the differential data and the differential pilot sequence, and determines a frame start location in the received data based on a result of the cross-correlation calculation, to complete frame synchronization. In this manner, impact of a laser frequency offset on the frame synchronization performed by the receiver is reduced, and effects of the frame synchronization are improved.

FIG. 6

EP 4 742 583 A1

## Description

This application claims priority to Chinese Patent Application No. 202311130829.9, filed with the China National Intellectual Property Administration on August 31, 2023 and entitled "DATA PROCESSING METHOD AND DATA PROCESSING APPARATUS", which is incorporated herein by reference in its entirety.

## TECHNICAL FIELD

Embodiments of this application relate to the field of optical communication, and in particular, to a data processing method and a data processing apparatus.

## BACKGROUND

Driven by advancements in 5G, cloud computing, big data, artificial intelligence, and the like, high-speed optical transport networks are evolving toward larger capacity, packet-based, and intelligent directions. Coherent optical communication systems use amplitudes, phases, polarization, and frequencies of optical waves to carry information. To resist optical signal distortion caused by dispersion, polarization-dependent impairment, noise, non-linear effects, and other factors in a transmission process and maintain long-distance transmission, the coherent optical communication systems typically introduce some designed fixed symbol sequences to transmission symbol sequences, to help a receiver restore transmitted symbols.

Frame formats adopted in 400ZR and 800ZR scenarios incorporate consecutive training sequences whose correlation exhibits high tolerance to laser frequency offset. However, 800LR scenarios adopt an extremely simplified frame structure, including a pilot sequence formed by periodically inserted pilot symbols. Such a pilot sequence has a long symbol period, and correlation of the pilot sequence is highly sensitive to laser frequency offset. Phase noise introduced by the laser frequency offset greatly reduces the correlation of the pilot sequence, and consequently severely affects frame synchronization performed by the receiver.

## SUMMARY

Embodiments of this application provide a data processing method and a data processing apparatus, to reduce impact of a laser frequency offset on frame synchronization performed by a receiver, and improve an effect of the frame synchronization.

According to a first aspect, an embodiment of this application provides a data processing method, and the data processing method is applied to a receiver. A plurality of consecutive data frames sent by a transmitter are transmitted to the receiver over a channel. It should be understood that received data after channel transmission may be considered as a symbol set including a plurality of symbols. Further, the symbol set includes R symbol subsets, and each of the symbol subsets includes W symbols. R is an integer greater than 1, and W is an integer greater than or equal to 1. Specifically, the receiver performs differential processing on each of the symbol subsets to obtain a corresponding differential symbol subset, so as to obtain a total of R differential symbol subsets. The receiver obtains a pilot sequence, and performs differential processing on the pilot sequence to obtain a differential pilot sequence, where the pilot sequence includes Z pilot symbols, $2 \leq Z \leq Q$, the Z pilot symbols in the pilot sequence are in one-to-one correspondence with Z pilot symbols in the data frame, any pilot symbol in the pilot sequence is c times a corresponding pilot symbol in the data frame, and c is not equal to 0. Further, the receiver determines a frame start location in the symbol set based on the R differential symbol subsets and the differential pilot sequence.

It should be noted that each of the data frames sent by the transmitter satisfies the following characteristics: In a polarization direction, the data frame includes N symbols, every M consecutive symbols of the N symbols include one pilot symbol at a fixed location and M-1 payload symbols, $N = M \times Q$, Q is an even number, M is an integer greater than or equal to 1, Q pilot symbols are generated by using a target polynomial and a seed, each pilot symbol is one of -A-Aj, -A+Aj, A-Aj, and A+Aj, and A is a real number.

In this implementation, considering that a frequency difference between a laser at the transmitter and a laser at the receiver, that is, a laser frequency offset, affects frame synchronization performed by the receiver, in this application, a differential processing operation is introduced in a process of performing the frame synchronization by the receiver, to reduce the impact of the laser frequency offset on the frame synchronization performed by the receiver, and improve the effect of the frame synchronization. In addition, the pilot symbols generated by the transmitter in the foregoing manner have good autocorrelation characteristics and cross-correlation characteristics, and satisfy a direct current balance. This helps the receiver restore signal quality.

In some possible implementations, the Z pilot symbols in the pilot sequence are in one-to-one correspondence with Z consecutive pilot symbols in the data frame, so that differential processing complexity is lower.

In some possible implementations, performing the differential processing on the symbol subset to obtain the differential symbol subset includes: The receiver obtains K symbols adjacent to a start location or an end location of the symbol subset. $K = a \times M$, and $1 \leq a \leq Z$. The receiver performs differential processing on a symbol sequence that includes the symbol subset and the K symbols, to obtain the differential symbol subset. In this implementation, the transmitter inserts pilot symbols into the data frame at spacings of every M symbols. Therefore, the receiver performs differential processing on each of the symbol subsets at spacings of K=a×M symbols, to ensure an implementation effect of the differential processing.

In some possible implementations, performing the differential processing on the symbol sequence that includes the symbol subset and the K symbols, to obtain the differential symbol subset includes: The receiver first performs conjugate calculation on a $v^{th}$ symbol in the symbol sequence, and then multiplies a result of the conjugate calculation by a $(v+K)^{th}$ symbol in the symbol sequence to obtain a $v^{th}$ symbol in an $s^{th}$ differential symbol subset. $0 \leq v \leq W-1$. This implementation provides a specific implementation of performing differential processing on the received data, and has good implementability.

In some possible implementations, performing the differential processing on the symbol sequence that includes the symbol subset and the K symbols, to obtain the differential symbol subset includes: The receiver first performs conjugate calculation on a $(v+K)^{th}$ symbol in the symbol sequence, and then multiplies a result of the conjugate calculation by a $v^{th}$ symbol in the symbol sequence to obtain a $v^{th}$ symbol in an $s^{th}$ differential symbol subset. $0 \leq v \leq W-1$. This implementation provides another specific implementation of performing differential processing on the received data. This enhances flexibility of this solution.

In some possible implementations, performing the differential processing on the pilot sequence to obtain the differential pilot sequence includes: The receiver performs right cyclic shift on the pilot sequence by a symbols, where $1 \leq a \leq Z$. The receiver performs conjugate calculation on a pilot sequence obtained through the right cyclic shift by the a symbols, to obtain a conjugate sequence; and multiplies, in one-to-one correspondence, Z symbols in the conjugate sequence by the Z pilot symbols in the pilot sequence to obtain the differential pilot sequence. This implementation provides a specific implementation of performing the differential processing on the pilot sequence, and the differential processing is performed on pilot symbols at spacings of a=K/M symbols. This ensures an implementation effect of the differential processing.

In some possible implementations, performing the differential processing on the pilot sequence to obtain the differential pilot sequence includes: The receiver performs left cyclic shift on the pilot sequence by a symbols, where $1 \leq a \leq Z$. The receiver performs conjugate calculation on a pilot sequence obtained through the left cyclic shift by the a symbols, to obtain a conjugate sequence; and multiplies, in one-to-one correspondence, Z symbols in the conjugate sequence by the Z pilot symbols in the pilot sequence to obtain the differential pilot sequence. This implementation provides another specific implementation of performing the differential processing on the pilot sequence. This enhances the flexibility of this solution.

In some possible implementations, $1 \leq a \leq \lfloor Z/2 \rfloor$, and $\lfloor b \rfloor$ represents rounding down a positive real number b. It should be understood that effects such as polarization rotation and phase noise of a transmission channel worsen correlation of a sequence, and as a value of a increases, impact of these effects is greater. Therefore, a smaller value of a is better.

In some possible implementations, the pilot sequence includes Q pilot symbols, and the Q pilot symbols in the pilot sequence are the same as Q pilot symbols in the data frame.

In some possible implementations, determining the frame start location in the symbol set based on the R differential symbol subsets and the differential pilot sequence includes: performing cross-correlation calculation on the R differential symbol subsets and the differential pilot sequence; and determining the frame start location in the symbol set based on a result of the cross-correlation calculation.

According to a second aspect, an embodiment of this application provides a chip. The chip includes a processor and a memory, the memory and the processor are connected to each other through a line, the memory stores instructions, and the processor is configured to perform the method described in any one of the implementations of the first aspect.

According to a third aspect, an embodiment of this application provides a data processing apparatus. The data processing apparatus includes: a receiving unit, a first differential processing unit, a second differential processing unit, and an identification unit. The receiving unit is configured to receive a symbol set derived from a plurality of data frames after channel transmission, where the plurality of data frames are sent by a transmitter. The symbol set includes R symbol subsets, each of the symbol subsets includes W symbols, R is an integer greater than 1, and W is an integer greater than or equal to 1. The first differential processing unit is configured to perform differential processing on each of the symbol subsets to obtain a corresponding differential symbol subset, so as to obtain a total of R differential symbol subsets. The second differential processing unit is configured to: obtain a pilot sequence, and perform differential processing on the pilot sequence to obtain a differential pilot sequence, where the pilot sequence includes Z pilot symbols, $1 \leq Z \leq Q$, the Z pilot symbols in the pilot sequence are in one-to-one correspondence with Z pilot symbols in the data frame, any pilot symbol in the pilot sequence is c times a corresponding pilot symbol in the data frame, and c is not equal to 0. The identification unit is configured to determine a frame start location in the symbol set based on the R differential symbol subsets and the differential pilot sequence.

It should be noted that each of the data frames sent by the transmitter satisfies the following characteristics: In a polarization direction, the data frame includes N symbols, every M consecutive symbols of the N symbols include one pilot symbol at a fixed location and M-1 payload symbols, N=M×Q, Q is an even number, M is an integer greater than or equal to 1, Q pilot symbols are generated by using a target polynomial and a seed, each pilot symbol is one of -A-Aj, -A+Aj, A-Aj, and A+Aj, and A is a real number.

In some possible implementations, the Z pilot symbols in the pilot sequence are in one-to-one correspondence with Z consecutive pilot symbols in the data frame.

In some possible implementations, the first differential processing unit is specifically configured to: obtain K symbols adjacent to a start location or an end location of the symbol subset, where K=a×M, and 1≤a≤Z; and perform differential processing on a symbol sequence that includes the symbol subset and the K symbols, to obtain the differential symbol subset.

In some possible implementations, the first differential processing unit is specifically configured to: perform conjugate calculation on a $v^{th}$ symbol in the symbol sequence; and multiply a result of the conjugate calculation by a $(v+K)^{th}$ symbol in the symbol sequence to obtain a $v^{th}$ symbol in the differential symbol subset, where 0≤v≤W-1.

In some possible implementations, the first differential processing unit is specifically configured to: perform conjugate calculation on a $(v+K)^{th}$ symbol in the symbol sequence; and multiply a result of the conjugate calculation by a $v^{th}$ symbol in the symbol sequence to obtain a $v^{th}$ symbol in the differential symbol subset, where 0≤v≤W-1.

In some possible implementations, the second differential processing unit is specifically configured to: perform right cyclic shift on the pilot sequence by a symbols, where 1≤a≤Z; perform conjugate calculation on a pilot sequence obtained through the right cyclic shift by the a symbols, to obtain a conjugate sequence; and multiply, in one-to-one correspondence, Z symbols in the conjugate sequence by the Z pilot symbols in the pilot sequence to obtain the differential pilot sequence.

In some possible implementations, the second differential processing unit is specifically configured to: perform left cyclic shift on the pilot sequence by a symbols, where 1≤a≤Z; perform conjugate calculation on a pilot sequence obtained through the left cyclic shift by the a symbols, to obtain a conjugate sequence; and multiply, in one-to-one correspondence, Z symbols in the conjugate sequence by the Z pilot symbols in the pilot sequence to obtain the differential pilot sequence.

In some possible implementations, $1≤a≤\lfloor Z/2 \rfloor$, and $\lfloor b \rfloor$ represents rounding down a positive real number b.

In some possible implementations, the pilot sequence includes Q pilot symbols, and the Q pilot symbols in the pilot sequence are the same as Q pilot symbols in the data frame.

In some possible implementations, the identification unit is specifically configured to: perform cross-correlation calculation on the R differential symbol subsets and the differential pilot sequence; and determine the frame start location in the symbol set based on a result of the cross-correlation calculation.

According to the foregoing technical solutions, it can be learned that embodiments of this application have the following advantages:

Considering that a frequency difference between a laser at a transmitter and a laser at a receiver, that is, a laser frequency offset, affects frame synchronization performed by the receiver, in this application, a differential processing operation is introduced in a process of performing the frame synchronization by the receiver. Specifically, the receiver performs differential processing on received data after channel transmission, to obtain differential data; and performs differential processing on a locally stored pilot sequence, to obtain a differential pilot sequence. Further, the receiver performs cross-correlation calculation on the differential data and the differential pilot sequence, and determines a frame start location in the received data based on a result of the cross-correlation calculation, to complete the frame synchronization. In this manner, the impact of the laser frequency offset on the frame synchronization performed by the receiver is reduced, and the effect of the frame synchronization is improved.

**BRIEF DESCRIPTION OF DRAWINGS**

FIG. 1 is a diagram of a communication system to which an embodiment of this application is applied;
FIG. 2 is a diagram of an implementation of a transmitter DSP processor according to an embodiment of this application;
FIG. 3 is a diagram of a structure of a data frame according to an embodiment of this application;
FIG. 4 is a diagram of a first generation structure of a pilot symbol according to an embodiment of this application;
FIG. 5 is a diagram of a second generation structure of a pilot symbol according to an embodiment of this application;
FIG. 6 is a schematic flowchart of a data processing method according to an embodiment of this application;
FIG. 7 is a diagram of a symbol sequence on which differential processing is performed according to an embodiment of this application;
FIG. 8 is a diagram of performing differential processing at spacings of K symbols according to an embodiment of this application;
FIG. 9 is a diagram of performing cyclic shift on a pilot sequence by a symbols according to an embodiment of this application;
FIG. 10 is a diagram of a first cross-correlation result of received data and a pilot sequence;

FIG. 11 is a diagram of a second cross-correlation result of received data and a pilot sequence;

FIG. 12 is a diagram of a structure of another data frame according to an embodiment of this application;

FIG. 13 is a diagram of a third generation structure of a pilot symbol according to an embodiment of this application;

FIG. 14 is a diagram of a autocorrelation characteristic and a cross-correlation characteristic that correspond to pilot symbols according to an embodiment of this application;

FIG. 15 is a diagram of reflecting an autocorrelation characteristic and a cross-correlation characteristic according to an embodiment of this application;

FIG. 16 is a diagram of a fourth generation structure of a pilot symbol according to an embodiment of this application;

FIG. 17 is another diagram of a autocorrelation characteristic and a cross-correlation characteristic that correspond to pilot symbols according to an embodiment of this application;

FIG. 18 is another diagram of reflecting an autocorrelation characteristic and a cross-correlation characteristic according to an embodiment of this application;

FIG. 19 is a diagram of a structure of a data processing apparatus used in a receiver according to an embodiment of this application; and

FIG. 20 is a diagram of another structure of a data processing apparatus according to an embodiment of this application.

## DESCRIPTION OF EMBODIMENTS

Embodiments of this application provide a data processing method and a data processing apparatus, to reduce impact of a laser frequency offset on frame synchronization performed by a receiver, and improve an effect of the frame synchronization.

It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in proper cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a list of steps or units is not necessarily limited to those expressly enumerated steps or units, but may include other steps or units not expressly enumerated or inherent to such a process, method, product, or device.

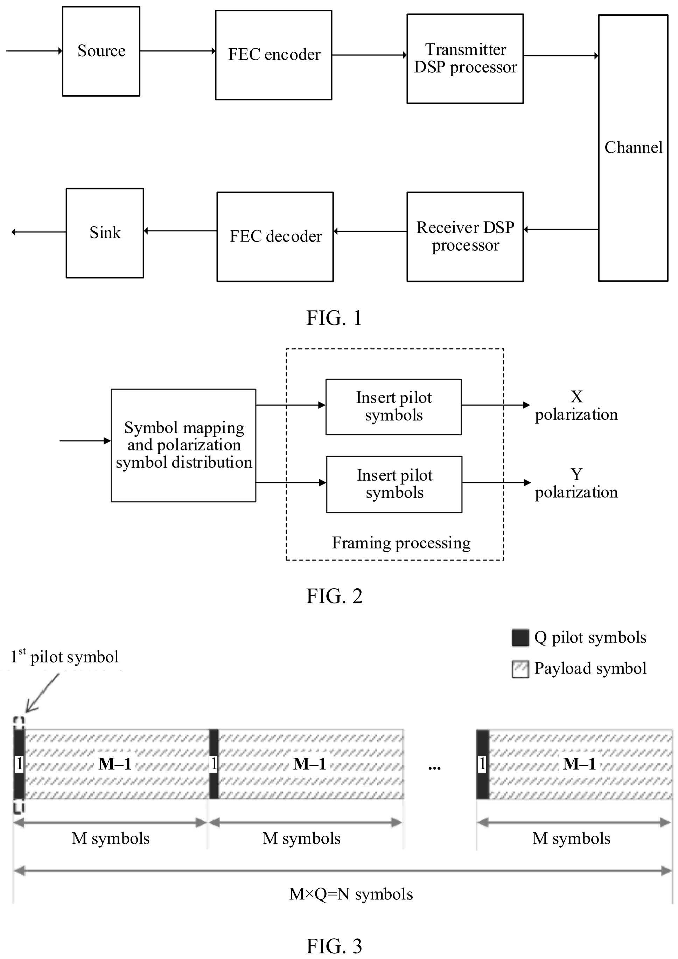

FIG. 1 is a diagram of a communication system to which an embodiment of this application is applied. As shown in FIG. 1, at a transmitter, a source provides a to-be-sent data stream. An encoder receives and encodes the data stream. Encoded codeword information combining a parity bit and an information bit is sent to a transmitter digital signal processing (Digital Signal Processing, DSP) processor for framing, and is transmitted to a receiver over a channel. After receiving a signal with distortion resulting from noise or other impairment on the channel, the receiver sends the signal to a receiver DSP processor for dispersion compensation, synchronization, phase recovery, and other operations. Then, a decoder performs decoding to restore original data, and sends the data to a sink.

FIG. 2 is a diagram of an implementation of a transmitter DSP processor according to an embodiment of this application. As shown in FIG. 2, in a possible implementation, the transmitter DSP processor performs symbol mapping on a received data sequence. Typically, the received data sequence is an information sequence and a parity sequence obtained based on a forward error correction (Forward Error Correction, FEC) code. A symbol mapping manner includes but is not limited to quadrature phase shift keying (Quadrature Phase Shift Keying, QPSK) and quadrature amplitude modulation (Quadrature Amplitude Modulation, QAM). The transmitter DSP processor further performs polarization symbol distribution on the data sequence to obtain a dual-polarization (Dual-polarization, DP) symbol, for example, a DP-QPSK, DP-8QAM, DP-16QAM, DP-32QAM, or DP-64QAM symbol. For ease of description, two polarization directions are collectively denoted as an X polarization direction and a Y polarization direction below, where the X polarization direction and the Y polarization direction are orthogonal to each other. It should be understood that the X polarization direction and the Y polarization direction are not two specified polarization directions, but are any two polarization directions orthogonal to each other.

Further, the transmitter DSP processor performs the following framing processing on a specific quantity of dual-polarization symbols. Specifically, pilot symbols are inserted in each of the X polarization direction and the Y polarization direction to obtain a to-be-sent dual-polarization symbol sequence, which is referred to as a frame (frame). In embodiments, the frame is referred to as a data frame or a DSP frame.

It should be noted that, after the symbol mapping, the symbols may be further interleaved, and the foregoing framing processing is performed on interleaved symbols. It should be understood that one dual-polarization symbol may be represented by two symbols, where one symbol is in the X polarization direction, and the other symbol is in the Y polarization direction. Each symbol may be represented by a complex number. For example, a symbol obtained through 16QAM modulation may be represented by any one of the following 16 complex numbers: $\pm1\pm1j$, $\pm1\pm3j$, $\pm3\pm1j$, and $\pm3\pm3j$, where $\pm$ herein represents a positive value or a negative value. For example, ±3 represents 3 or -3. j represents an imaginary unit. In some scenarios, the imaginary unit may alternatively be represented by another symbol like i. This is not limited herein. In some cases, real and imaginary parts are normalized, but the essence does not change. Further, a sequence having L dual-polarization symbols may be completely represented by two complex sequences whose lengths are L, where one complex sequence represents symbols in the X polarization direction, and the other complex sequence represents symbols in the Y polarization direction. Each complex sequence whose length is L is represented by a real part sequence (also referred to as an I-component sequence) whose length is L and an imaginary part sequence (also referred to as a Q-component sequence) whose length is L, where L is an integer greater than 1. Therefore, there are four different types of sequences, including an X-polarization I-component sequence, an X-polarization Q-component sequence, a Y-polarization I-component sequence, and a Y-polarization Q-component sequence.

The following first describes in detail a structure of a data frame generated by the transmitter. It should be understood that the data frame includes symbols in two polarization directions, and structures of the data frame in the two polarization directions are similar. For example, the data frame includes N symbols in the X polarization direction and N symbols in the Y polarization direction. The following describes the structure of the data frame by using one of the polarization directions as an example.

FIG. 3 is a diagram of a structure of a data frame according to an embodiment of this application. As shown in FIG. 3, in a polarization direction, the data frame includes N symbols, every M consecutive symbols of the N symbols include one pilot (pilot) symbol at a fixed location and M-1 payload (payload) symbols, $N=M \times Q$, Q is an even number, and M is an integer greater than or equal to 1. In other words, every M consecutive symbols of the N symbols may be considered as one group, and the N symbols include Q groups of symbols in total. For example, N=6144, M=64, Q=96, a symbol 1 to a symbol 64 are 64 consecutive symbols in a 1st group, a symbol 65 to a symbol 128 are 64 consecutive symbols in a 2nd group, ..., and a symbol 6081 to a symbol 6144 are 64 consecutive symbols in a 96th group. It should be understood that the payload symbol may also be referred to as a symbol before framing, and includes an information symbol and a parity symbol that are obtained through FEC encoding. At a receiver, a pilot symbol may be used to assist in carrier phase recovery, and may be further used to distinguish between two polarization directions.

It should be understood that a specific location of a pilot symbol in each group of M symbols is not limited in this application. In an example, each pilot symbol is at a start location of M consecutive symbols to which the pilot symbol belongs. For example, a 1st symbol in the data frame shown in FIG. 3 is a 1st pilot symbol.

It should be noted that Q pilot symbols in the data frame are generated by using a target polynomial (polynomial) and a seed (seed). Each pilot symbol is one of -A-Aj, -A+Aj, A-Aj, and A+Aj, and A is a real number. A degree (degree) of the target polynomial is less than or equal to 10, and a quantity of terms of the target polynomial is greater than or equal to 2 and less than or equal to 8, so that hardware implementation complexity is low. In addition, the Q pilot symbols satisfy a direct current balance (Direct Current Balance), that is, a sum of the Q pilot symbols is 0, to be specific, a sum of real parts and a sum of imaginary parts of complex numbers corresponding to the Q pilot symbols are both 0, so that the direct current balance can be achieved. This helps the receiver restore signal quality.

In addition, two polarization directions are orthogonal to each other. To be specific, when one of the polarization directions is X polarization, the other polarization direction is Y polarization; or when one of the polarization directions is Y polarization, the other polarization direction is X polarization.

In the data frame, a sequence that includes Q pilot symbols in the X polarization direction is different from a sequence that includes Q pilot symbols in the Y polarization direction. For example, when a sequence that includes pilot symbols in the X polarization direction is -A-Aj, -A-Aj, A+Aj, and A-Aj, based on a same order, a sequence that includes pilot symbols in the Y polarization direction cannot be the same as the sequence that includes the pilot symbols in the X polarization direction, and may be -A-Aj, -A-Aj, A+Aj, and A+Aj. There is one different symbol. This avoids a problem that the receiver cannot distinguish between the two polarization directions in actual transmission.

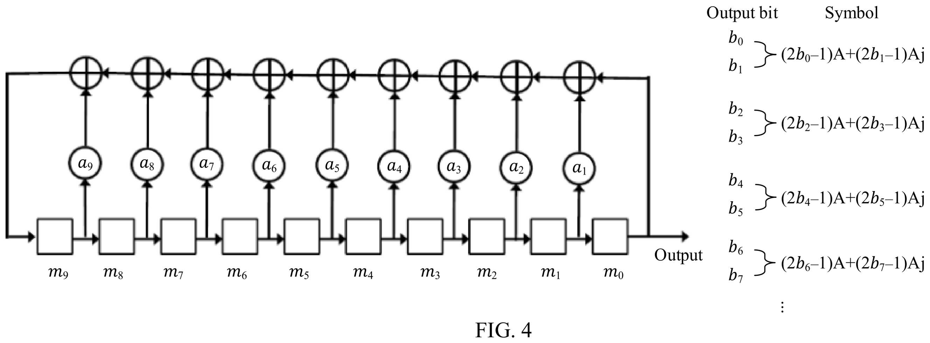

In embodiments of this application, when a 10-degree polynomial is used as the target polynomial, the 10-degree polynomial may be represented as:
$x^{10} + a_9 \times x^9 + a_8 \times x^8 + a_7 \times x^7 + a_6 \times x^6 + a_5 \times x^5 + a_4 \times x^4 + a_3 \times x^3 + a_2 \times x^2 + a_1 \times x + 1$, where values of $a_9$, ... , and $a_1$ may be 0 or 1. FIG. 4 is a diagram of a first generation structure of a pilot symbol according to an embodiment of this application. As shown in FIG. 4, each box may be considered as one storage element, and a quantity of storage elements is the same as a quantity of bits in a preloaded seed, that is, each storage element is configured to input a corresponding bit that is in the seed. For example, a length of the seed is 10 bits, and the seed may be represented as $m_9$, $m_8$, $m_7$, $m_6$, $m_5$, $m_4$, $m_3$, $m_2$, $m_1$, and $m_0$ in a binary form. In this case, 10 corresponding storage elements are used. Certainly, the seed may alternatively be represented in a hexadecimal or decimal form, and needs to be converted into the binary form during an operation with the target polynomial. For example, 0110111000 is represented as 0x1B8 in the hexadecimal form, and is represented as 440 in the decimal form.

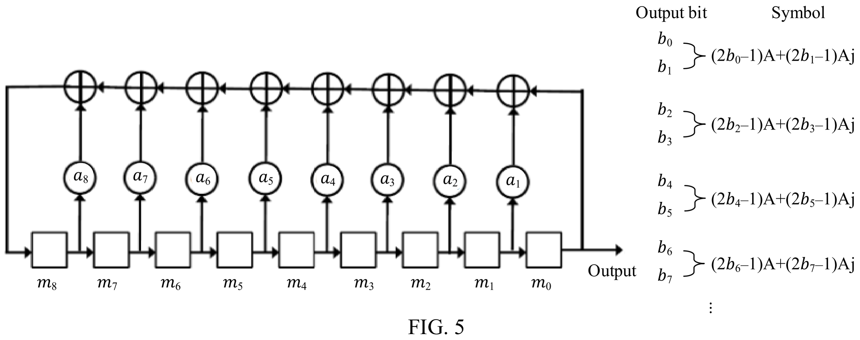

FIG. 5 is a diagram of a second generation structure of a pilot symbol according to an embodiment of this application. As shown in FIG. 5, a length of the seed is 9 bits, and the seed may be represented as $m_8$, $m_7$, $m_6$, $m_5$, $m_4$, $m_3$, $m_2$, $m_1$, and $m_0$ in a binary form. Certainly, the seed may alternatively be represented in a hexadecimal or decimal form, and needs to be converted into the binary form during an operation with the target polynomial.

In embodiments of this application, the target polynomial and the seed may be determined by designing the values of the coefficients $a_9$, ..., and $a_1$ in the 10-degree polynomial or values of coefficients $a_8$, ..., and $a_1$ in a 9-degree polynomial, so that a generated pilot symbol sequence in the X polarization direction or the Y polarization direction has a good autocorrelation characteristic, and pilot symbol sequences in the two polarization directions have a good cross-correlation characteristic. In addition, a proper target polynomial and seed are selected, so that the Q pilot symbols achieve the direct current balance. This helps the receiver restore the signal quality.

It should be noted that the data frame considered in embodiments of the present invention includes only the pilot symbol and the payload symbol (also referred to as the symbol before framing). This DSP frame structure is different from another existing DSP superframe structure. A DSP superframe usually includes a plurality of types of symbols, for example, a frame synchronization symbol used for frame synchronization and distinguishing between two polarization directions, a training symbol used for link training, and a pilot symbol used for carrier phase recovery. Therefore, in receiver processing that corresponds to the DSP frame considered in the present invention, in addition to assisting in the carrier phase recovery, the pilot symbol further needs to be used for distinguishing between the two polarization directions and the frame synchronization. The receiver obtains four data streams: a real part sequence data stream in the X polarization direction, an imaginary part sequence data stream in the X polarization direction, a real part sequence data stream in the Y polarization direction, and an imaginary part sequence data stream in the Y polarization direction; and needs to use pilot symbols to determine whether each data stream corresponds to a real part sequence or an imaginary part sequence in the X polarization direction or the Y polarization direction. In embodiments of the present invention, the target polynomial and the seed are determined by designing the values of the coefficients $a_9$, ..., and $a_1$ in the 10-degree polynomial or the values of the coefficients $a_8$, ..., and $a_1$ in the 9-degree polynomial, so that real part (also referred to as I-component) sequences and imaginary part (also referred to as Q-component) sequences of generated pilot symbol sequences in the two polarization directions have good autocorrelation characteristics and cross-correlation characteristics. More specifically, a total of four sequences with lengths of Q bits: a real part sequence of a designed pilot symbol sequence in the X polarization direction, an imaginary part sequence of the designed pilot symbol sequence in the X polarization direction, a real part sequence of a designed pilot symbol sequence in the Y polarization direction, and an imaginary part sequence of the designed pilot symbol sequence in the Y polarization direction have good autocorrelation characteristics and good cross-correlation characteristics.

It should be noted that a data frame sent by the transmitter is transmitted to the receiver over a channel. Considering that a frequency difference between a laser at the transmitter and a laser at the receiver, that is, a laser frequency offset, affects frame synchronization performed by the receiver, in this application, a differential processing operation is introduced in a process of performing the frame synchronization by the receiver, so that correlation between received data and a known pilot sequence is no longer sensitive to the laser frequency offset, to ensure the effect of the frame synchronization. It should be understood that, data received by the receiver is data after channel transmission, and may be understood as a signal with distortion resulting from noise or other impairment in the channel. The data received by the receiver includes a plurality of data frames generated by the transmitter, but the data received by the receiver is not aligned with data sent by the transmitter. Therefore, the receiver needs to perform digital signal processing on the received data to implement the frame synchronization, so as to determine a frame start location in the received data. In some possible implementations, each of the data frames sent by the transmitter includes a pilot symbol, and the receiver may perform digital signal processing by using the pilot symbol, to determine the frame start location.

The following describes a process in which the receiver performs frame synchronization in this application.

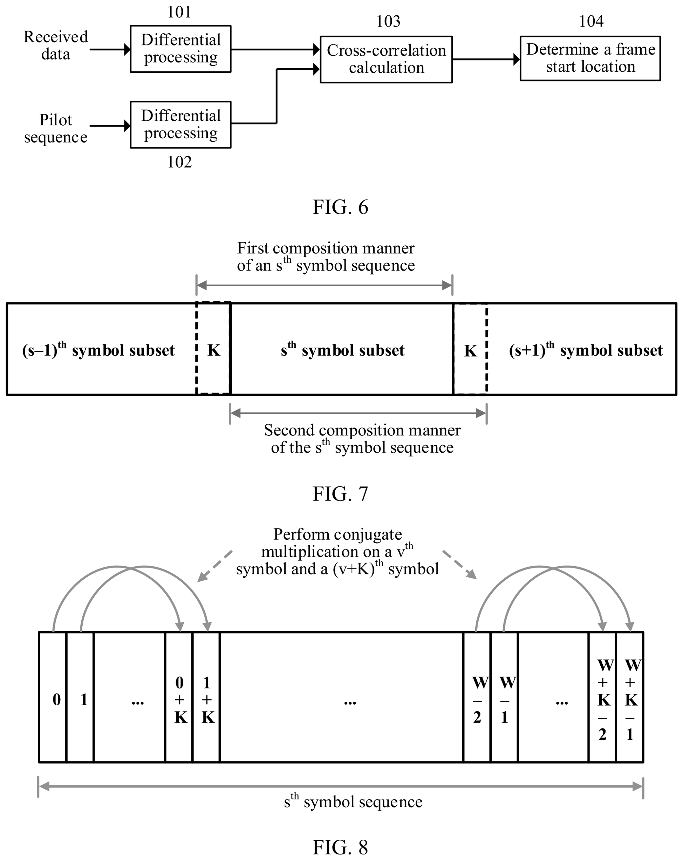

FIG. 6 is a schematic flowchart of a data processing method according to an embodiment of this application. It should be understood that the data processing method is applied to a receiver, for example, may be specifically implemented by the receiver DSP processor shown in FIG. 1.

It should be noted that a transmitter performs framing processing on a specific quantity of dual-polarization symbols. Specifically, pilot symbols are inserted in each of an X polarization direction and a Y polarization direction to obtain a to-be-sent dual-polarization symbol sequence, which is referred to as a frame (frame). In this application, the frame is referred to as a data frame, and may also be referred to as a DSP frame. It should be understood that the X polarization direction and the Y polarization direction are not two specified polarization directions, but are any two polarization directions orthogonal to each other. In other words, the transmitter sends symbol sequences in the two polarization directions. Therefore, data received by the receiver includes symbols in the two polarization directions. Data processing methods performed by the receiver on the symbols in the two polarization directions are similar. For ease of description, the following describes the data processing method of the receiver by using one of the polarization directions as an example.

Specifically, as shown in step 101, the receiver performs differential processing on received data transmitted over a channel, to obtain differential data. As shown in step 102, the receiver performs differential processing on an obtained pilot sequence, to obtain a differential pilot sequence. As shown in step 103, the receiver performs cross-correlation calculation on the differential data and the differential pilot sequence. As shown in step 104, the receiver determines a frame start location in the received data based on a result of the cross-correlation calculation, to complete frame synchronization.

It should be noted that the pilot sequence obtained by the receiver includes Z pilot symbols, where $2 \leq Z \leq Q$. In an example, the receiver pre-stores a pilot sequence, and reads the pilot sequence when differential processing needs to be performed. In another example, the receiver may alternatively generate, based on a target polynomial and a seed, a pilot sequence that includes Z pilot symbols. A specific manner of generating the pilot symbols is similar to that of generating pilot symbols by the transmitter. Details are not described herein again. It should be understood that Q pilot symbols in each of data frames sent by the transmitter are the same, and the receiver only needs to obtain one pilot sequence, and does not need to obtain a corresponding quantity of a plurality of pilot sequences for a plurality of received data frames.

It should be understood that the data frame generated by the transmitter includes Q pilot symbols, and the Z pilot symbols in the pilot sequence obtained by the receiver are in one-to-one correspondence with Z pilot symbols in the data frame. In addition, any pilot symbol in the pilot sequence is c times of a corresponding pilot symbol in the data frame, where c is not equal to 0. For example, if one pilot symbol in the data frame is A+Aj, a pilot symbol that corresponds to the pilot symbol and that is in the pilot sequence may be A+Aj, 2A+2Aj, or the like. In a first possible scenario, the Z pilot symbols in the pilot sequence are in one-to-one correspondence with Z consecutive pilot symbols in the data frame. For example, Q=96 and Z=48. The pilot sequence may be any 48 consecutive pilot symbols in the data frame. In a second possible scenario, the pilot sequence includes Q pilot symbols, and the Q pilot symbols in the pilot sequence are the same as the Q pilot symbols in the data frame. In a third possible scenario, the pilot sequence may alternatively be Z inconsecutive pilot symbols in the data frame.

The following first uses the first possible scenario and the second possible scenario as examples to describe in detail a differential processing operation in a frame synchronization process.

For step 101, one of the polarization directions is used as an example. The received data after channel transmission may be considered as a symbol set including a plurality of symbols, where the symbol set includes symbol sequences that are of the plurality of data frames generated by the transmitter and that are in the polarization direction. Further, the symbol set includes R symbol subsets, and each of the symbol subsets includes W symbols. R is an integer greater than 1, and W is an integer greater than or equal to 1. It should be understood that a symbol subset division manner is irrelevant to a size of the data frame, in other words, a quantity of symbols in the symbol subset may be the same as or different from a quantity of symbols in the data frame. This is not specifically limited herein. It should be further understood that the symbol subset herein is merely a concept introduced for ease of description. Actually, the data received by the receiver is a whole and may not be divided.

FIG. 7 is a diagram of a symbol sequence on which differential processing is performed according to an embodiment of this application. Specifically, the receiver performs differential processing on each of the symbol subsets at spacings of K symbols, in other words, a symbol sequence on which differential processing is performed each time includes one symbol subset and K symbols adjacent to the symbol subset. As shown in FIG. 7, an $s^{th}$ symbol subset is used as an example. $0 \leq s \leq R-1$. K symbols adjacent to the $s^{th}$ symbol subset are first obtained, where the K symbols may be K symbols at the end of an $(s-1)^{th}$ symbol subset, or may be K symbols at the start of an $(s+1)^{th}$ symbol subset. It should be understood that, for a $0^{th}$ symbol subset, only K symbols at the start of a $1^{st}$ symbol subset can be selected. Further, differential processing is performed on an $s^{th}$ symbol sequence that includes the $s^{th}$ symbol subset and the K symbols adjacent to the $s^{th}$ symbol subset, to obtain an $s^{th}$ differential symbol subset, so as to obtain differential data that includes R differential symbol subsets. $K=a \times M$, and $1 \leq a \leq Z$.

FIG. 8 is a diagram of performing differential processing at spacings of K symbols according to an embodiment of this application. As shown in FIG. 8, that the differential processing is performed on the $s^{th}$ symbol sequence is used as an example. Specifically, the differential processing is conjugate multiplication performed on a $v^{th}$ symbol and a $(v+K)^{th}$ symbol in the $s^{th}$ symbol sequence, where $0 \leq v \leq W-1$. In a possible implementation, conjugate calculation is first performed on the $v^{th}$ symbol in the $s^{th}$ symbol sequence, and then a result of the conjugate calculation is multiplied by the $(v+K)^{th}$ symbol in the $s^{th}$ symbol sequence to obtain a $v^{th}$ symbol in the $s^{th}$ differential symbol subset. The differential processing is performed in this manner to obtain the $s^{th}$ differential symbol subset. In another possible implementation, conjugate calculation is first performed on the $(v+K)^{th}$ symbol in the $s^{th}$ symbol sequence, and then a result of the conjugate calculation is multiplied by the $v^{th}$ symbol in the $s^{th}$ symbol sequence to obtain a $v^{th}$ symbol in the $s^{th}$ differential symbol subset. The differential processing is performed in this manner to obtain the $s^{th}$

differential symbol subset.

For step 102, the receiver first performs cyclic shift on a locally stored pilot sequence, and then performs differential processing based on the original pilot sequence and a pilot sequence obtained through the cyclic shift, to obtain the differential pilot sequence. It should be understood that a length of the pilot sequence obtained through the cyclic shift is unchanged, but locations of pilot symbols in the pilot sequence are shifted one by one in one direction. The cyclic shift includes two manners: left cyclic shift and right cyclic shift. The following uses cyclic shift by a symbols as an example for description. It should be noted that, in this application, pilot symbols are inserted into the sent data frame at spacings of every M symbols. Therefore, when differential processing is performed on the received data at spacings of $K=a \times M$ symbols, correspondingly, differential processing is performed on the pilot symbols at spacings of $a=K/M$ symbols.

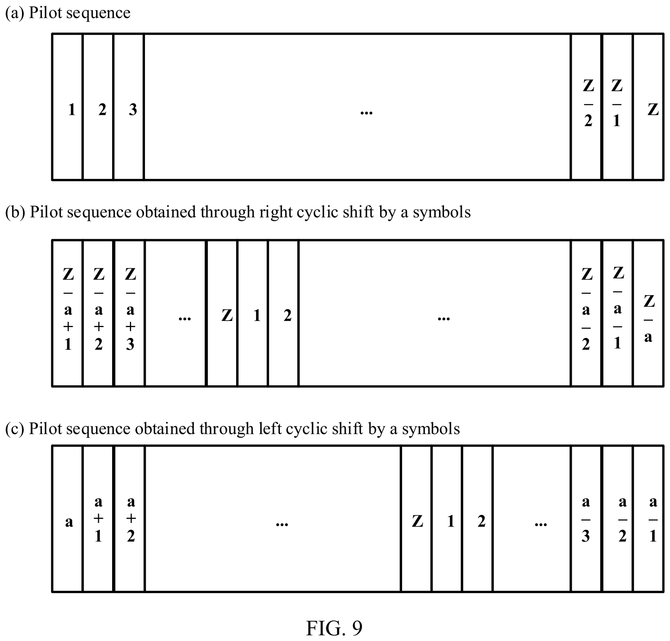

FIG. 9 is a diagram of performing cyclic shift on a pilot sequence by a symbols according to an embodiment of this application. (a) in FIG. 9 shows the original pilot sequence before cyclic shift. (b) in FIG. 9 shows a pilot sequence obtained through right cyclic shift by the a symbols. (c) in FIG. 9 shows a pilot sequence obtained through left cyclic shift by the a symbols. $1 \leq a \leq Z$.

In a possible implementation, the receiver performs conjugate calculation on the pilot sequence obtained through the right cyclic shift by the a symbols, to obtain a conjugate sequence; and multiplies, in one-to-one correspondence, Z symbols in the conjugate sequence by the Z pilot symbols in the original pilot sequence to obtain the differential pilot sequence. In another possible implementation, the receiver performs conjugate calculation on the pilot sequence obtained through the left cyclic shift by the a symbols, to obtain a conjugate sequence; and multiplies, in one-to-one correspondence, Z symbols in the conjugate sequence by the Z pilot symbols in the original pilot sequence to obtain the differential pilot sequence.

It should be noted that a value range of a is preferably $1 \leq a \leq \lfloor Z/2 \rfloor$, where $\lfloor Z/2 \rfloor$ represents rounding down a positive real number Z/2. It should be understood that effects such as polarization rotation and phase noise of a transmission channel worsen correlation of a sequence, and as a value of a increases, impact of these effects is greater. Therefore, a smaller value of a is better.

It should be noted that, in addition to the foregoing descriptions that the differential processing is performed on the pilot sequence through the cyclic shift, the differential processing may alternatively be performed on the pilot sequence in another manner. The cyclic shift is only a simple implementation.

For the foregoing third possible scenario, the pilot sequence may alternatively be the Z inconsecutive pilot symbols in the data frame. The following briefly describes this scenario by using an example.

In a possible implementation, pilot symbols are extracted from a pilot symbol sequence of the data frame at spacings of G symbols, and the pilot symbols are used as a receiver pilot sequence, where G is a positive even number exactly divisible by Q, and $2 \leq G$. In this case, a value of K for differential processing is $K=G \times a \times M$. Based on this, a differential processing operation is similar to the processing manners described in the first possible scenario and the second possible scenario. In other words, the receiver performs differential processing on each of symbol subsets at spacings of K symbols, and performs differential processing on the pilot sequence at spacings of a symbols.

For step 103, the receiver performs cross-correlation calculation on the R differential symbol subsets obtained in step 101 and the differential pilot sequence obtained in step 102. In an example, cross-correlation calculation may be first separately performed on the R differential symbol subsets and the differential pilot sequence, and then results of R times of cross-correlation calculation are integrated. In another example, cross-correlation calculation may alternatively be performed on the R differential symbol subsets as a whole and the differential pilot sequence. It should be understood that results that are of the cross-correlation calculation and that are obtained in the foregoing two examples are the same.

Specifically, implementation of the cross-correlation may be represented by the following formula:

$$Cor(S) = \sum_{n=1}^{N} D(n+S+M)T(n)$$

or

$$Cor(S) = \sum_{n=1}^{N} D(n+S+M)T^*(n)$$

D represents the R differential symbol subsets, T represents the differential pilot sequence, S represents an offset, $-N \leq S \leq N-1$ or $0 \leq S \leq N-1$, and $T^*(n)$ represents performing conjugation on a symbol in the differential pilot sequence. It can be learned from a definition of the cross-correlation that, when the offset S is equal to $S_0$, the differential data is aligned with the differential pilot sequence, a cross-correlation value is the largest, and this location corresponds to the frame start location. In addition, to simplify calculation complexity, a part of the differential pilot sequence may be intercepted, and then cross-correlation calculation is performed on the part of the differential pilot sequence and the differential data, where a length of the part of the differential pilot sequence is greater than 0 and less than or equal to Z.

For step 104, when a location of the received data is aligned with that of the pilot sequence, the cross-correlation value is the largest. However, when there is a specific offset between the locations of the received data and the pilot sequence, the cross-correlation value is small. Therefore, a cross-correlation peak value may be used to find the frame start location, to implement the frame synchronization by the receiver. It should be noted that the foregoing describes a processing manner in a polarization direction, and a processing manner in the other polarization direction is similar. One cross-correlation peak value may be obtained by comprehensively considering cross-correlation results of the two polarizations, to determine a common start location of the received data in the two polarization directions, so as to implement the frame synchronization.

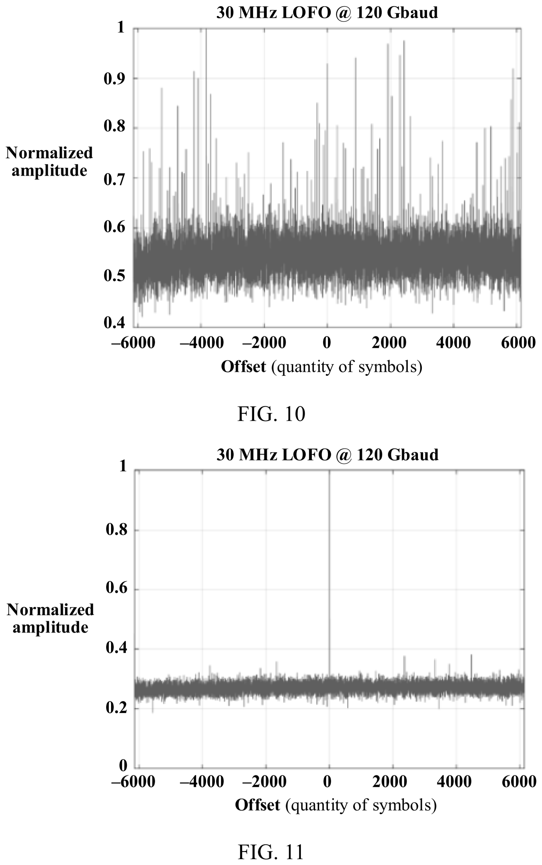

FIG. 10 is a diagram of a first cross-correlation result of received data and a pilot sequence. FIG. 11 is a diagram of a second cross-correlation result of received data and a pilot sequence. As shown in FIG. 10 and FIG. 11, a horizontal coordinate represents an offset (a unit is a quantity of symbols), and a vertical coordinate represents a normalized amplitude. It should be understood that FIG. 10 shows a cross-correlation result obtained when differential processing is performed on neither the received data nor the pilot sequence, and FIG. 11 shows a cross-correlation result obtained when differential processing is performed on both the received data and the pilot sequence. It can be learned from comparison that a peak value in FIG. 10 is not obvious, and it is difficult to identify the frame start location; and a peak value in FIG. 11 is obvious, and cross-correlation is better, which facilitates identification of the frame start location. Therefore, introducing differential processing in the frame synchronization process is more conducive to implementing the frame synchronization, and can improve a tolerance capability for a laser frequency offset.

Based on the foregoing descriptions, in this application, the differential processing operation is introduced in the process of performing the frame synchronization by the receiver. Specifically, the receiver performs the differential processing on the received data after channel transmission, to obtain the differential data; and performs the differential processing on the locally stored pilot sequence, to obtain the differential pilot sequence. Further, the receiver performs the cross-correlation calculation on the differential data and the differential pilot sequence, and determines the frame start location in the received data based on the result of the cross-correlation calculation, to complete the frame synchronization. In this manner, impact of the laser frequency offset on the frame synchronization performed by the receiver is reduced, and an effect of the frame synchronization is improved. In addition, the pilot symbols generated by the transmitter in the foregoing manner have good autocorrelation characteristics and cross-correlation characteristics, and satisfy a direct current balance. This helps the receiver restore signal quality.

It should be noted that, to implement better differential correlation, a target polynomial and a seed for generating a pilot sequence by the transmitter need to be specifically designed.

The following describes several specific embodiments by using an example in which N=6144, M=64, and Q=96.

Embodiment 1: The target polynomial is $x^{10}+x^9+x^6+x+1$, a seed in the X polarization direction is 0x0B4, and a seed in the Y polarization direction is 0x2D1.

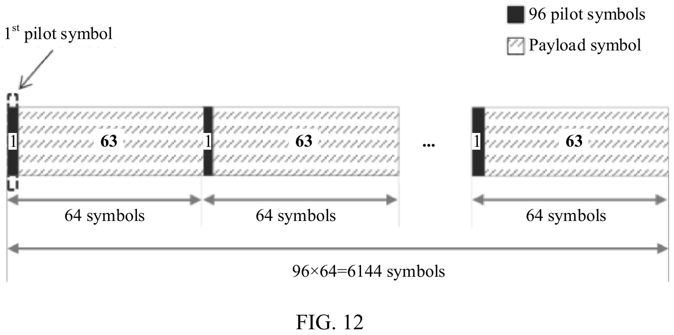

FIG. 12 is a diagram of a structure of another data frame according to an embodiment of this application. Considering dual-polarization DP-16QAM modulation, $96 \times 63 = 6048$ dual-polarization payload symbols are obtained through BCH (126, 110) encoding and the DP-16QAM dual-polarization modulation. One pilot symbol is inserted before every 63 symbols in the 6048 payload symbols, and a total of 96 pilot symbols are inserted, to obtain the structure of the data frame (also referred to as a DSP frame) shown in FIG. 12, that is, N=6144, M=64, and Q=96. In the X polarization direction or the Y polarization direction, the 96 pilot symbols are generated based on the target polynomial and the seed.

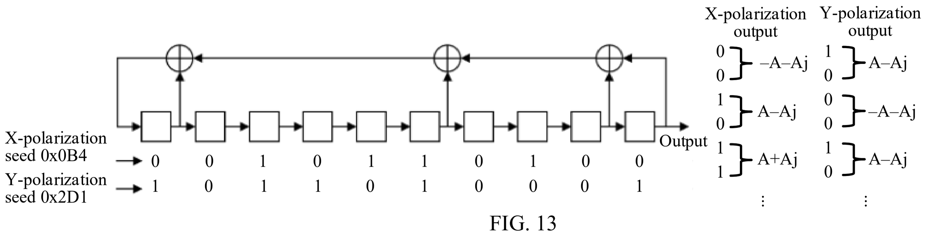

FIG. 13 is a diagram of a third generation structure of a pilot symbol according to an embodiment of this application. If the target polynomial is $x^{10}+x^9+x^6+x+1$, the seed in the X polarization direction is 0x0B4, and the seed in the Y polarization direction is 0x2D1, a process of generating 96 pilot symbols in each of the two polarization directions is shown in FIG. 13.

In the X polarization direction, the input seed is 0x0B4, and is converted into a binary sequence 0010110100, that is, values of $m_9$ to $m_0$. If two bits that are consecutively output in sequence are 1 and 0, a pilot symbol in the X polarization direction is A-Aj. If two bits that are consecutively output in sequence are 0 and 0, a pilot symbol in the X polarization direction is -A-Aj. If two bits that are consecutively output in sequence are 1 and 1, a pilot symbol in the X polarization direction is A+Aj. If two bits that are consecutively output in sequence are 0 and 1, a pilot symbol in the X polarization direction is -A+Aj. By analogy, 96 pilot symbols in the X polarization direction may be obtained.

In the Y polarization direction, the input seed is 0x2D1, and is converted into a binary sequence 1011010001, that is, values of $m_9$ to $m_0$. If two bits that are consecutively output in sequence are 1 and 0, a pilot symbol in the Y polarization direction is A-Aj. If two bits that are consecutively output in sequence are 0 and 0, a pilot symbol in the Y polarization direction is -A-Aj. If two bits that are consecutively output in sequence are 1 and 1, a pilot symbol in the Y polarization direction is A+Aj. If two bits that are consecutively output in sequence are 0 and 1, a pilot symbol in the Y polarization direction is -A+Aj. By analogy, 96 pilot symbols in the Y polarization direction may be obtained.

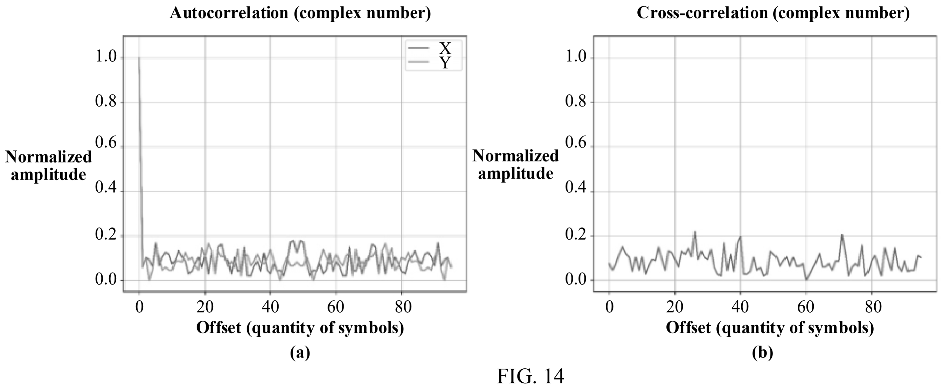

FIG. 14 is a diagram of a autocorrelation characteristic and a cross-correlation characteristic that correspond to pilot symbols according to an embodiment of this application. As shown in FIG. 14, a horizontal coordinate represents an offset (a unit is a quantity of symbols), and a vertical coordinate represents a normalized amplitude. (a) in FIG. 14 shows periodic autocorrelation results obtained by performing differencing at spacings of two symbols in pilot symbol sequences in the X and Y polarization directions. (b) in FIG. 14 shows a periodic differential cross-correlation result of the pilot symbol sequences in the X and Y polarization directions. Normalized amplitudes of side lobe values of periodic differential autocorrelation functions of the symbol sequences in the two polarization directions are not greater than 0.179, and a normalized amplitude of a periodic differential cross-correlation function of the symbol sequences in the two polarization directions is not greater than 0.222.

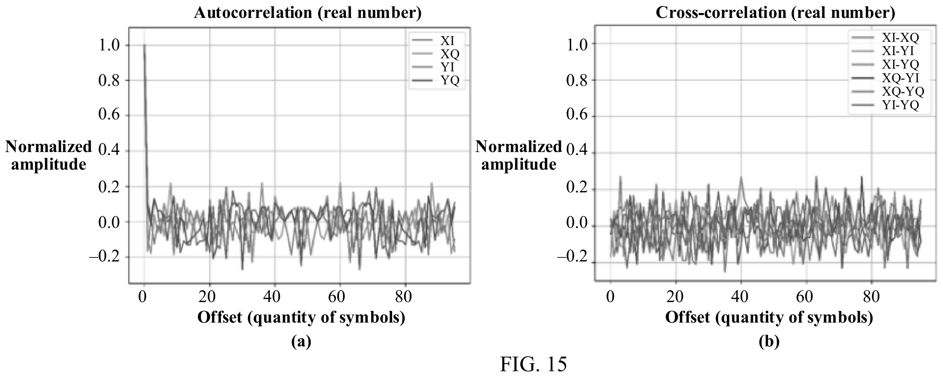

FIG. 15 is a diagram of reflecting an autocorrelation characteristic and a cross-correlation characteristic according to an embodiment of this application. As shown in FIG. 15, a horizontal coordinate represents an offset (a unit is a quantity of symbols), and a vertical coordinate represents a normalized amplitude. A real part sequence of a pilot symbol sequence in the X polarization direction is denoted as (X_I), an imaginary part sequence of the pilot symbol sequence in the X polarization direction is denoted as (X_Q), a real part sequence of a pilot symbol sequence in the Y polarization direction is denoted as (Y_I), and an imaginary part sequence of the pilot symbol sequence in the Y polarization direction is denoted as (Y_Q). FIG. 15 shows autocorrelation characteristics and cross-correlation characteristics of the four sequences: X_I, X_Q, Y_I, and Y_Q whose lengths are Q bits. (a) in FIG. 15 shows periodic differential autocorrelation results of the real part sequence in the X polarization direction (X_I), the imaginary part sequence in the X polarization direction (X_Q), the real part sequence in the Y polarization direction (Y_I), and the imaginary part sequence in the Y polarization direction (Y_Q). (b) in FIG. 15 shows periodic differential cross-correlation results of the real part sequence in the X polarization direction and the real part sequence in the Y polarization direction (X_I&Y_I), the real part sequence in the X polarization direction and the imaginary part sequence in the X polarization direction (X_I&X_Q), the real part sequence in the X polarization direction and the imaginary part sequence in the Y polarization direction (X_I&Y_Q), the imaginary part sequence in the X polarization direction and the real part sequence in the Y polarization direction (X_Q&Y_I), the real part sequence in the Y polarization direction and the imaginary part sequence in the Y polarization direction (Y_I&Y_Q), and the imaginary part sequence in the X polarization direction and the imaginary part sequence in the Y polarization direction (X_Q&Y_Q). Neither normalized amplitudes of side lobe values of periodic differential autocorrelation functions nor normalized amplitudes of periodic differential cross-correlation functions are greater than 0.2709.

Based on received signals in the two polarization directions, the receiver performs DSP by using a PS pilot sequence, to restore signals. For example, differential correlation values between the received signals and sequence symbols of the PS pilot sequence in the X polarization and the Y polarization are separately calculated, so that the polarization directions can be distinguished, frame synchronization and alignment can be performed, and carrier phase recovery is performed by using a PS pilot signal. The designed pilot symbol sequence has a good differential autocorrelation characteristic and differential cross-correlation characteristic, and satisfies a direct current balance. This helps the receiver improve quality of the restored signals.

Embodiment 2: The target polynomial is $x^{10}+x^9+x^4+x+1$, a seed in the X polarization direction is 0x128, and a seed in the Y polarization direction is 0x12A.

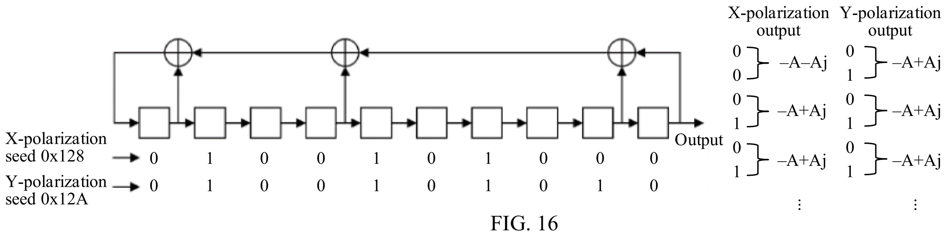

FIG. 16 is a diagram of a fourth generation structure of a pilot symbol according to an embodiment of this application. If the target polynomial is $x^{10}+x^9+x^4+x+1$, the seed in the X polarization direction is 0x128, and the seed in the Y polarization direction is 0x12A, a process of generating 96 pilot symbols in each of the two polarization directions is shown in FIG. 16.

In the X polarization direction, the input seed is 0x128, and is converted into a binary sequence 0100101000, that is, values of $m_9$ to $m_0$. If two bits that are consecutively output in sequence are 1 and 0, a pilot symbol in the X polarization direction is A-Aj. If two bits that are consecutively output in sequence are 0 and 0, a pilot symbol in the X polarization direction is -A-Aj. If two bits that are consecutively output in sequence are 1 and 1, a pilot symbol in the X polarization direction is A+Aj. If two bits that are consecutively output in sequence are 0 and 1, a pilot symbol in the X polarization direction is -A+Aj. By analogy, 96 pilot symbols in the X polarization direction may be obtained.

In the Y polarization direction, the input seed is 0x12A, and is converted into a binary sequence 0100101010, that is, values of $m_9$ to $m_0$. If two bits that are consecutively output in sequence are 1 and 0, a pilot symbol in the Y polarization direction is A-Aj. If two bits that are consecutively output in sequence are 0 and 0, a pilot symbol in the Y polarization direction is -A-Aj. If two bits that are consecutively output in sequence are 1 and 1, a pilot symbol in the Y polarization direction is A+Aj. If two bits that are consecutively output in sequence are 0 and 1, a pilot symbol in the Y polarization direction is -A+Aj. By analogy, 96 pilot symbols in the Y polarization direction may be obtained.

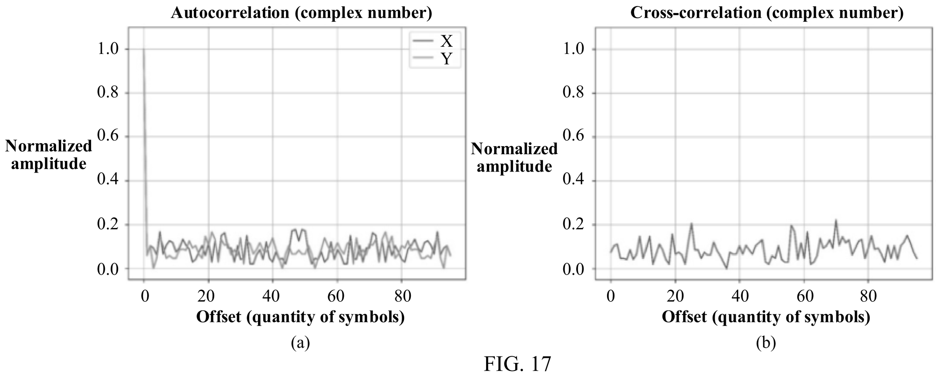

FIG. 17 is another diagram of a autocorrelation characteristic and a cross-correlation characteristic that correspond to pilot symbols according to an embodiment of this application. As shown in FIG. 17, the horizontal coordinate represents an offset (expressed in symbols), and the vertical coordinate represents a normalized amplitude. (a) in FIG. 17 shows periodic autocorrelation results obtained by performing differencing at spacings of two symbols in pilot symbol sequences in the X and Y polarization directions. (b) in FIG. 17 shows a periodic differential cross-correlation result of the pilot symbol sequences in the X and Y polarization directions. Normalized amplitudes of side lobe values of periodic differential autocorrelation functions of the symbol sequences in the two polarization directions are not greater than 0.178, and a normalized amplitude of a periodic differential cross-correlation function of the symbol sequences in the two polarization directions is not greater than 0.222.

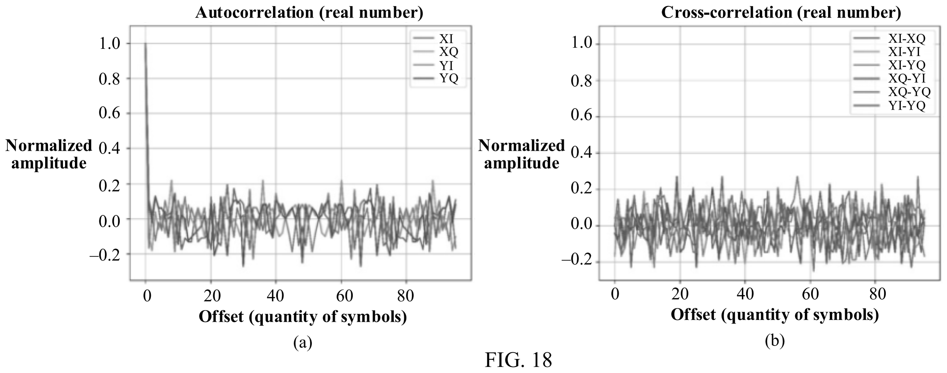

FIG. 18 is another diagram of reflecting an autocorrelation characteristic and a cross-correlation characteristic according to an embodiment of this application. As shown in FIG. 18, the horizontal coordinate represents an offset (expressed in symbols), and the vertical coordinate represents a normalized amplitude. A real part sequence of a pilot symbol sequence in the X polarization direction is denoted as (X_I), an imaginary part sequence of the pilot symbol sequence in the X polarization direction is denoted as (X_Q), a real part sequence of a pilot symbol sequence in the Y polarization direction is denoted as (Y_I), and an imaginary part sequence of the pilot symbol sequence in the Y polarization direction is denoted as (Y_Q). FIG. 18 shows autocorrelation characteristics and cross-correlation characteristics of the four sequences: X_I, X_Q, Y_I, and Y_Q whose lengths are Q bits. (a) in FIG. 18 shows periodic differential autocorrelation results of the real part sequence in the X polarization direction (X_I), the imaginary part sequence in the X polarization direction (X_Q), the real part sequence in the Y polarization direction (Y_I), and the imaginary part sequence in the Y polarization direction (Y_Q). (b) in FIG. 18 shows periodic differential cross-correlation results of the real part sequence in the X polarization direction and the real part sequence in the Y polarization direction (X_I&Y_I), the real part sequence in the X polarization direction and the imaginary part sequence in the X polarization direction (X_I&X_Q), the real part sequence in the X polarization direction and the imaginary part sequence in the Y polarization direction (X_I&Y_Q), the imaginary part sequence in the X polarization direction and the real part sequence in the Y polarization direction (X_Q&Y_I), the real part sequence in the Y polarization direction and the imaginary part sequence in the Y polarization direction (Y_I&Y_Q), and the imaginary part sequence in the X polarization direction and the imaginary part sequence in the Y polarization direction (X_Q&Y_Q). Neither normalized amplitudes of side lobe values of periodic differential autocorrelation functions nor normalized amplitudes of periodic differential cross-correlation functions are greater than 0.2709.

Based on received signals in the two polarization directions, the receiver performs DSP by using a PS pilot sequence, to restore signals. For example, differential correlation values between the received signals and sequence symbols of the PS pilot sequence in the X polarization and the Y polarization are separately calculated, so that the polarization directions can be distinguished, frame synchronization and alignment can be performed, and carrier phase recovery is performed by using a PS pilot signal. The designed pilot symbol sequence has a good differential autocorrelation characteristic and differential cross-correlation characteristic, and satisfies a direct current balance. This helps the receiver improve quality of the restored signals.

The following describes data processing apparatuses provided in embodiments of this application.

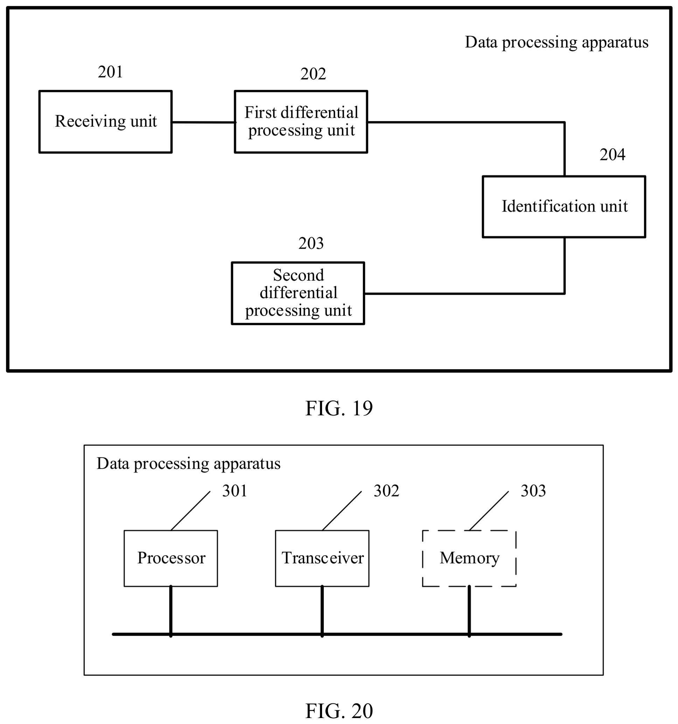

FIG. 19 is a diagram of a structure of a data processing apparatus used in a receiver according to an embodiment of this application. As shown in FIG. 19, the data processing apparatus includes a receiving unit 201, a first differential processing unit 202, a second differential processing unit 203, and an identification unit 204. The receiving unit 201 is configured to receive data transmitted from a transmitter over a channel. The first differential processing unit 202 is configured to perform the operation of step 101. The second differential processing unit 203 is configured to perform the operation of step 102. The identification unit 204 is configured to perform the operations of step 103 and step 104.

It should be understood that the data processing apparatus provided in this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, or may be independent physical units, or two or more functional units may be integrated into one processing unit. The integrated unit may be implemented in a form of hardware, or may be implemented in a form of a software functional unit.

FIG. 20 is a diagram of another structure of a data processing apparatus according to an embodiment of this application. As shown in FIG. 20, the data processing apparatus includes a processor 301 and a transceiver 302. The processor 301 and the transceiver 302 are connected to each other through a line. Specifically, the transceiver 302 is configured to perform data sending and receiving operations, and the processor 301 is configured to perform operations other than data sending and receiving. In a possible implementation, the processor 301 may include the first differential processing unit 202, the second differential processing unit 203, and the identification unit 204 that are shown in FIG. 19, and the transceiver 302 includes the receiving unit 201 shown in FIG. 19. Optionally, the data processing apparatus may further include a memory 303. The memory 303 is configured to store program instructions and data.

An embodiment of this application further provides a chip. A circuit and one or more interfaces that are configured to implement the function of the processor 301 are integrated into the chip. When a memory is integrated into the chip, the chip may implement the method steps in any one or more of the foregoing embodiments. When no memory is integrated into the chip, the chip may be connected to an external memory through an interface. The chip implements, based on program code stored in the external memory, actions performed by the transmitter device or the receiver device in the foregoing embodiments.

It should be noted that the processor shown in FIG. 20 may be a general-purpose central processing unit (Central Processing Unit, CPU), a general-purpose processor, a digital signal processor (DSP), an application-specific integrated circuit (ASIC), a field programmable gate array (FPGA) or another programmable logic device, a transistor logic device, a hardware component, or any combination thereof. The memory shown in FIG. 20 may store an operating system and another application program. When the technical solutions provided in embodiments of this application are implemented by software or firmware, program code used for implementing the technical solutions provided in embodiments of this application is stored in the memory and is executed by the processor. In an embodiment, the processor may include the memory inside. In another embodiment, the processor and the memory are two independent structures.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

A person of ordinary skill in the art may understand that all or some of the steps in the foregoing embodiments may be implemented by hardware or a program instructing related hardware. The program may be stored in a computer-readable storage medium. The storage medium mentioned above may be a read-only memory, a random access memory, or the like. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When the software is used for the implementation, all or some of the method steps described in the foregoing embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, DVD), a semiconductor medium (for example, a solid state disk (SSD)), or the like.

Finally, it should be noted that: The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, comprising:

    receiving a symbol set derived from a plurality of data frames after channel transmission, wherein the plurality of data frames are sent by a transmitter, in a polarization direction, each of the data frames comprises N symbols, every M consecutive symbols of the N symbols comprise one pilot symbol at a fixed location and M-1 payload symbols, N=M$\times$Q, Q is an even number, M is an integer greater than or equal to 1, the symbol set comprises R symbol subsets, each of the symbol subsets comprises W symbols, R is an integer greater than 1, and W is an integer greater than or equal to 1;
    performing differential processing on each of the symbol subsets to obtain a corresponding differential symbol subset, so as to obtain a total of R differential symbol subsets;
    obtaining a pilot sequence, and performing differential processing on the pilot sequence to obtain a differential pilot sequence, wherein the pilot sequence comprises Z pilot symbols,

$2 \leq Z \leq Q$, the Z pilot symbols in the pilot sequence are in one-to-one correspondence with Z pilot symbols in the data frame, any pilot symbol in the pilot sequence is c times a corresponding pilot symbol in the data frame, and c is not equal to 0; and

determining a frame start location in the symbol set based on the R differential symbol subsets and the differential pilot sequence.

2. The method according to claim 1, wherein the Z pilot symbols in the pilot sequence are in one-to-one correspondence with Z consecutive pilot symbols in the data frame.

3. The method according to claim 2, wherein performing the differential processing on the symbol subset to obtain the differential symbol subset comprises:

obtaining K symbols adjacent to a start location or an end location of the symbol subset, wherein $K = a \times M$, and $1 \leq a \leq Z$; and
performing differential processing on a symbol sequence that comprises the symbol subset and the K symbols, to obtain the differential symbol subset.

4. The method according to claim 3, wherein performing the differential processing on the symbol sequence that comprises the symbol subset and the K symbols, to obtain the differential symbol subset comprises:

performing conjugate calculation on a $v^{th}$ symbol in the symbol sequence; and
multiplying a result of the conjugate calculation by a $(v+K)^{th}$ symbol in the symbol sequence to obtain a $v^{th}$ symbol in the differential symbol subset, wherein $0 \leq v \leq W-1$.

5. The method according to claim 3, wherein performing the differential processing on the symbol sequence that comprises the symbol subset and the K symbols, to obtain the differential symbol subset comprises:

performing conjugate calculation on a $(v+K)^{th}$ symbol in the symbol sequence; and
multiplying a result of the conjugate calculation by a $v^{th}$ symbol in the symbol sequence to obtain a $v^{th}$ symbol in the differential symbol subset, wherein $0 \leq v \leq W-1$.

6. The method according to any one of claims 2 to 5, wherein performing the differential processing on the pilot sequence to obtain the differential pilot sequence comprises:

performing right cyclic shift on the pilot sequence by a symbols, wherein $1 \leq a \leq Z$;
performing conjugate calculation on a pilot sequence obtained through the right cyclic shift by the a symbols, to obtain a conjugate sequence; and
multiplying, in one-to-one correspondence, Z symbols in the conjugate sequence by the Z pilot symbols in the pilot sequence to obtain the differential pilot sequence.

7. The method according to any one of claims 2 to 5, wherein performing the differential processing on the pilot sequence to obtain the differential pilot sequence comprises:

performing left cyclic shift on the pilot sequence by a symbols, wherein $1 \leq a \leq Z$;
performing conjugate calculation on a pilot sequence obtained through the left cyclic shift by the a symbols, to obtain a conjugate sequence; and
multiplying, in one-to-one correspondence, Z symbols in the conjugate sequence by the Z pilot symbols in the pilot sequence to obtain the differential pilot sequence.

8. The method according to any one of claims 3 to 7, wherein $1 \leq a \leq \lfloor Z/2 \rfloor$, and $\lfloor b \rfloor$ represents rounding down a positive real number b.

9. The method according to any one of claims 1 to 8, wherein the pilot sequence comprises Q pilot symbols, and the Q pilot symbols in the pilot sequence are the same as Q pilot symbols in the data frame.

10. The method according to any one of claims 1 to 9, wherein determining the frame start location in the symbol set based on the R differential symbol subsets and the differential pilot sequence comprises:

performing cross-correlation calculation on the R differential symbol subsets and the differential pilot sequence; and
determining the frame start location in the symbol set based on a result of the cross-correlation calculation.

11. A chip, wherein the chip comprises a processor and a memory, the memory and the processor are connected to each other through a line, the memory stores instructions, and the processor is configured to perform the method according to any one of claims 1 to 10.

12. A data processing apparatus, comprising: a receiving unit, a first differential processing unit, a second differential processing unit, and an identification unit, wherein

the receiving unit is configured to receive a symbol set derived from a plurality of data frames after channel transmission, wherein the plurality of data frames are sent by a transmitter, wherein in a polarization direction, the data frame comprises N symbols, every M consecutive symbols of the N symbols comprise one pilot symbol at a fixed location and M-1 payload symbols, $N=M\times Q$, Q is an even number, M is an integer greater than or equal to 1, the symbol set comprises R symbol subsets, each of the symbol subsets comprises W symbols, R is an integer greater than 1, and W is an integer greater than or equal to 1;

the first differential processing unit is configured to perform differential processing on each of the symbol subsets to obtain a corresponding differential symbol subset, so as to obtain a total of R differential symbol subsets;

the second differential processing unit is configured to: obtain a pilot sequence, and perform differential processing on the pilot sequence to obtain a differential pilot sequence, wherein the pilot sequence comprises Z pilot symbols, $1\leq Z\leq Q$, the Z pilot symbols in the pilot sequence are in one-to-one correspondence with Z pilot symbols in the data frame, any pilot symbol in the pilot sequence is c times a corresponding pilot symbol in the data frame, and c is not equal to 0; and

the identification unit is configured to determine a frame start location in the symbol set based on the R differential symbol subsets and the differential pilot sequence.

13. The data processing apparatus according to claim 12, wherein the Z pilot symbols in the pilot sequence are in one-to-one correspondence with Z consecutive pilot symbols in the data frame.

14. The data processing apparatus according to claim 13, wherein the first differential processing unit is specifically configured to:

obtain K symbols adjacent to a start location or an end location of the symbol subset, wherein $K=a\times M$, and $1\leq a\leq Z$; and
perform differential processing on a symbol sequence that comprises the symbol subset and the K symbols, to obtain the differential symbol subset.

15. The data processing apparatus according to claim 14, wherein the first differential processing unit is specifically configured to:

perform conjugate calculation on a $v^{th}$ symbol in the symbol sequence; and
multiply a result of the conjugate calculation by a $(v+K)^{th}$ symbol in the symbol sequence to obtain a $v^{th}$ symbol in the differential symbol subset, wherein $0\leq v\leq W-1$.

16. The data processing apparatus according to claim 14, wherein the first differential processing unit is specifically configured to:

perform conjugate calculation on a $(v+K)^{th}$ symbol in the symbol sequence; and
multiply a result of the conjugate calculation by a $v^{th}$ symbol in the symbol sequence to obtain a $v^{th}$ symbol in the differential symbol subset, wherein $0\leq v\leq W-1$.

17. The data processing apparatus according to any one of claims 13 to 16, wherein the second differential processing unit is specifically configured to:

perform right cyclic shift on the pilot sequence by a symbols, wherein $1\leq a\leq Z$;
perform conjugate calculation on a pilot sequence obtained through the right cyclic shift by the a symbols, to obtain a conjugate sequence; and
multiply, in one-to-one correspondence, Z symbols in the conjugate sequence by the Z pilot symbols in the pilot sequence to obtain the differential pilot sequence.

18. The data processing apparatus according to any one of claims 13 to 16, wherein the second differential processing unit is specifically configured to:

perform left cyclic shift on the pilot sequence by a symbols, wherein $1\leq a\leq Z$;
perform conjugate calculation on a pilot sequence obtained through the left cyclic shift by the a symbols, to obtain a conjugate sequence; and
multiply, in one-to-one correspondence, Z symbols in the conjugate sequence by the Z pilot symbols in the pilot sequence to obtain the differential pilot sequence.

19. The data processing apparatus according to any one of claims 14 to 18, wherein $1\leq a\leq\lfloor Z/2\rfloor$, and $\lfloor b\rfloor$ represents rounding down a positive real number b.

20. The data processing apparatus according to any one of claims 12 to 19, wherein the pilot sequence comprises Q pilot symbols, and the Q pilot symbols in the pilot sequence are the same as Q pilot symbols in the data frame.

21. The data processing apparatus according to any one of claims 12 to 20, wherein the identification unit is specifically configured to:

perform cross-correlation calculation on the R differential symbol subsets and the differential pilot sequence; and
determine the frame start location in the symbol set based on a result of the cross-correlation calculation.

FIG. 1

FIG. 2

FIG. 3

FIG. 4

FIG. 5

Output bit      Symbol

$b_0$
$b_1$ $\quad (2b_0-1)A+(2b_1-1)Aj$

$b_2$
$b_3$ $\quad (2b_2-1)A+(2b_3-1)Aj$

$b_4$
$b_5$ $\quad (2b_4-1)A+(2b_5-1)Aj$

$b_6$
$b_7$ $\quad (2b_6-1)A+(2b_7-1)Aj$

$\vdots$

101

Received data → Differential processing → Cross-correlation calculation → Determine a frame start location

103

104

Pilot sequence → Differential processing

102

## FIG. 6

First composition manner of an sth symbol sequence

| (s−1)th symbol subset | K | sth symbol subset | K | (s+1)th symbol subset |

Second composition manner of the sth symbol sequence

## FIG. 7

Perform conjugate multiplication on a vth symbol and a (v+K)th symbol

| 0 | 1 | ... | 0 +K | 1 +K | ... | W −2 | W −1 | ... | W +K −2 | W +K −1 |

sth symbol sequence

## FIG. 8

(a) Pilot sequence

(b) Pilot sequence obtained through right cyclic shift by a symbols

(c) Pilot sequence obtained through left cyclic shift by a symbols

FIG. 9

**30 MHz LOFO @ 120 Gbaud**

FIG. 10

**30 MHz LOFO @ 120 Gbaud**

FIG. 11

FIG. 12

EP 4 742 583 A1

X-polarization
seed 0x0B4

Y-polarization
seed 0x2D1

Output

X-polarization
output

| | |
|---|---|
| 0 0 | −A−Aj |
| 1 0 | A−Aj |
| 1 1 | A+Aj |
| ⋮ | |

Y-polarization
output

| | |
|---|---|
| 1 0 | A−Aj |
| 0 0 | −A−Aj |
| 1 0 | A−Aj |
| ⋮ | |

FIG. 13

FIG. 14

FIG. 15

EP 4 742 583 A1

X-polarization
seed 0x128

Y-polarization
seed 0x12A

X-polarization output  Y-polarization output

0
0 } −A−Aj     0
1 } −A+Aj

0
1 } −A+Aj     0
1 } −A+Aj

0
1 } −A+Aj     0
1 } −A+Aj

⋮               ⋮

Output

FIG. 16

FIG. 17

**Autocorrelation (real number)**

XI
XQ
YI
YQ

Normalized amplitude

Offset (quantity of symbols)

(a)

**Cross-correlation (real number)**

XI-XQ
XI-YI
XI-YQ
XQ-YI
XQ-YQ
YI-YQ

Normalized amplitude

Offset (quantity of symbols)

(b)

FIG. 18

EP 4 742 583 A1

Data processing apparatus

201

Receiving unit

202

First differential
processing unit

204

Identification unit

203

Second
differential
processing unit

FIG. 19

Data processing apparatus

301

Processor

302

Transceiver

303

Memory

FIG. 20

## INTERNATIONAL SEARCH REPORT

| International application No. |
| --- |
| **PCT/CN2024/095487** |

**A.    CLASSIFICATION OF SUBJECT MATTER**

H04L 7/00(2006.01)i;  H04L 27/26(2006.01)n

According to International Patent Classification (IPC) or to both national classification and IPC

**B.    FIELDS SEARCHED**

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, JPTXT, 3GPP, IEEE, IETF, EPONPL: 同步, 接收, 差分, 起始 位置, 频偏, 偏振, 极化, 导频, 符号, 共轭, 循环移位, 互相关, synchronize, receive, differential, starting position, frequency offset, polar, pilot, symbol, conjugate, cyclic shift, correlate

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112804178 A (NATIONAL UNIVERSITY OF DEFENSE TECHNOLOGY OF PLA) 14 May 2021 (2021-05-14) see entire document | 1-21 |
| A | CN 101640650 A (SAMSUNG ELECTRONICS CO., LTD. et al.) 03 February 2010 (2010-02-03) see entire document | 1-21 |
| A | CN 113132076 A (XI'AN CREATION KEJI CO., LTD.) 16 July 2021 (2021-07-16) see entire document | 1-21 |
| A | WO 2008038986 A1 (ELECTRONICS AND TELECOMMUNICATIONS RESEARCH INSTITUTE et al.) 03 April 2008 (2008-04-03) see entire document | 1-21 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 July 2024** | **23 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/095487**

| Patent document cited in search report | | | Publication date (day/month/year) | Patent family member(s) | | | Publication date (day/month/year) |
|---|---|---|---|---|---|---|---|
| CN | 112804178 | A | 14 May 2021 | None | | | |
| CN | 101640650 | A | 03 February 2010 | None | | | |
| CN | 113132076 | A | 16 July 2021 | None | | | |
| WO | 2008038986 | A1 | 03 April 2008 | EP | 2074736 | A1 | 01 July 2009 |
| | | | | EP | 2074736 | A4 | 29 June 2011 |
| | | | | EP | 2074736 | B1 | 02 April 2014 |
| | | | | KR | 100763598 | B1 | 05 October 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311130829